# EUROPEAN PATENT SPECIFICATION

(11) **EP 2 180 636 B1**
(45) Date of publication and mention of the grant of the patent: **28.12.2011**
(21) Application number: 08305718.2
(22) Date of filing: 23.10.2008
(51) Int. Cl.: H04L 12/24

(54) **Method for signaling a unidirectional failure of a packet-switched link**
Verfahren zur Signalisierung eines unidirektionalen Fehlers einer paketgeschalteten Verknüpfung
Procédé de signalisation d'une défaillance unidirectionnelle d'une liaison commutée par paquets

(43) Date of publication of application: 28.04.2010
(73) Proprietor: Alcatel Lucent, 75008 Paris (FR)
(72) Inventor: Giribaldi, Maurizio, 18100, IMPERIA (IT); Speciale, Massimo, 16163, GENOVA (IT); Torassa, Sergio, 17019, VARAZZE (IT)
(74) Representative: Schmidt, Werner Karl

(56) References cited:
- EP-A- 1 845 656
- WO-A-2005/008392
- US-A- 4 190 821
- US-B1- 6 507 561
- KATZ JUNIPER NETWORKS D WARD CISCO SYSTEMS D: "Bidirectional Forwarding Detection; draft-ietf-bfd-base-08.txt" BIDIRECTIONAL FORWARDING DETECTION; DRAFT-IETF-BFD-BASE-08.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. bfd, no. 8, 1 March 2008 (2008-03-01), XP015057943
- "Operation & Maintenance mechanism for MPLS networks; Y.1711 (02/04)" T STANDARD IN FORCE (I), INTERNATIONAL TELECOMMUNICATION UNION, GENEVA, CH, no. Maintenance mechanis, 12 February 2004 (2004-02-12), XP017404384
- SUWALO G ET AL: "SONET/SDH - Like resilience for IP networks: a survey of traffic protection mechanisms", IEEE NETWORK, IEEE SERVICE CENTER, NEW YORK, NY, US LNKD- DOI:10.1109/MNET.2004.1276607, vol. 18, no. 2, 1 March 2004 (2004-03-01), pages 20-25, XP011109499, ISSN: 0890-8044

## Description

### Technical Field

The present invention relates to the field of communication network protection. In particular, the present invention relates to a method for signaling a unidirectional failure of a packet-switched link in a packet-switched communication network. Further, the present invention relates to a network element suitable for implementing such a method.

### Background Art

It is known that a packet-switched communication network, such as for instance an Ethernet network, is suitable for transporting traffic in the form of packets, each packet being independently routed through the communication network.

In particular, for routing packets, each network element of a packet-switched communication network is provided with a respective routing table. The routing table typically associates possible destination addresses of packets with respective link identifiers identifying links exiting the network element. When a network element receives a given packet, it typically reads its destination address, it uses the destination address as search key in the routing table for retrieving a link identifier, and then it forwards the packet through the link identified by the retrieved link identifier.

Typically, packet-switched communication networks are configured for implementing a traffic protection mechanism, which allows to protect transmission of packets (i.e. to ensure that packets reach the destination network element) in case a failure occurs in the network.

In particular, in a packet-switched communication network comprising two network elements connected by a bidirectional link, while the link is normally operating and each network element is transmitting to the other one a respective flow of packets, each network element normally receives from the other one a respective flow of packets.

If a bidirectional failure occurs on the link (i.e. a failure affecting transmission in both directions of the link), both network elements detect a "Loss of Signal", thereby becoming aware of the failure. Therefore, both network elements may start taking actions for rerouting the traffic to a protection link bypassing the failed link.

On the other hand, if a unidirectional failure occurs on the link (i.e. a failure affecting only transmission in a single direction of the link), only the network element located downstream the failure detects a "Loss of Signal", thus becoming aware of the failure. However, the network element located upstream the failure still receives packets from the other one, and therefore is not aware of the failure. This implies that it does not take any action for rerouting packets.

According to known traffic protection mechanisms, the network element located downstream the failure typically informs the network element located upstream the failure by transmitting it signaling packets containing a "link failure" information. Upon reception of such signaling packets, the upstream network element becomes aware of the unidirectional failure, and may then take suitable actions for rerouting the packets in such a way to bypass the failed link.

In a packet-switched communication network, two network elements may be connected by means of more than one link, in order to increase capacity of the connection between the two network elements and to provide a protection in case one of the links fails. One of the most widespread technique making use of more than one link for connecting two network elements is the so-called "link aggregation". According to the link aggregation technique, the flow of user packets transmitted from a network element to the other is shared among a number of links connecting the two network elements and forming a so-called "link aggregation group" (briefly, LAG). For instance, in case of Ethernet links, the link aggregation is managed by means of a Link Aggregation Control Protocol (briefly, LACP).

If a bidirectional failure occurs on one of the links of a LAG, both network elements detect a "Loss of Signal" on such a link, thereby becoming aware of the failure. Therefore, both network elements may start taking actions for removing the failed link from the LAG.

On the other hand, if a unidirectional failure occurs on one of the links of the LAG, only the network element located downstream the failure detects the "Loss of Signal", thus becoming aware of the failure. However, the network element located upstream the failure still receives all the packets from the other one, and therefore is not aware of the failure. This implies that it does not take any action for removing the failed link from the LAG.

According to the link aggregation technique, the network element located downstream the failure typically informs the network element located upstream the failure by transmitting it signaling packets containing a "link failure" information. Upon reception of such signaling packets, the upstream network element becomes aware of the unidirectional failure, and may then take suitable actions for removing the failed link from the LAG.

D. Katz (Juniper Networks) and D. Ward (Cisco Systems), "Bidirectional Forwarding Detection; draft-ietf-bdf-base-08.txt", March 08, Internet Engineering Task Force, IETF, Standard Working Draft, Internet Society (ISOC), vol. bdf n.8, 1 March 2008 discloses a protocol intended to detect faults in a bidirectional path between two forwarding engines.

US 6 507 561 discloses a network wherein a plurality of links connects a plurality of nodes such as cross-connects in a communication circuit network with paths interconnecting the nodes, and with there being spare capacity between a sufficient number of nodes to accommodate at least some rerouting of traffic immediately upon detection of a break in a traffic span in the network so as to restore circuit continuity within a predetermined maximum time using an improved failure detection, isolation, and recovery scheme.

WO 2005/008392 discloses that each span of a communication network, such as a BLSR ring, is assigned a unique span ID. When a node of the network detects a failure in a span (including a straddling span) of the network, the node exchanges commands, according to an automatic protection switching (APS) protocol, that request other nodes of the network to switch network traffic from a working span (including a straddling span) to a protect span.

EP 1 845 656 discloses a method for implementing master and backup transmission path comprising the following steps: set standby LSPs for each physical transmission link in Data Communication Network (DCN); and when the physical transmission link fails, transmit the packets that need to be transmitted on the physical transmission link to the standby LSP to transfer. US 4190821 discloses a method for notifying a detected unidirectional fault condition in a bidirectional loop by creating a signal loss on the back-up line. The present invention can enhance the packet transmission reliability of DCN and reduce the maintenance workload and complexity of the master and backup transmission path.

### Summary of the Invention

The Applicant has noticed that, disadvantageously, the above known methods for signaling a unidirectional failure from the network element located downstream the failure to the network element located upstream the failure disadvantageously have some drawbacks.

Indeed, the above known methods are mostly based on use of signaling packets. However, using signaling packets disadvantageously involves software-based operations (such as the generation, at the transmission side, of the signaling packets and their processing at the reception side). Such software-based operations disadvantageously are rather long, and may induce unacceptable delays in performing actions to be taken in response to the failure (rerouting packets or removing the failed link from the LAG should be performed within 50 ms, while the average delay between failure and consequent actions is of 100 ms about, according to the above known software-based solutions).

Hardware-based solutions are also known, such as for instance the so called "auto-negotiation". These solutions are faster than software-based solutions but, disadvantageously, they are supported only by certain types of interfaces. For instance, 10 GE (10 Gigabit Ethernet) interfaces do not support auto-negotiation.

Accordingly, the Applicant has tackled the problem of providing a method for signaling a unidirectional failure on a packet-switched link which overcomes the aforesaid drawbacks, i.e. which is faster than known methods, thus allowing to perform actions to be taken in response to the failure within an acceptable delay.

According to a first aspect, the present invention provides a method for signaling a unidirectional failure on a bidirectional link of a packet-switched communication network, the bidirectional link connecting a first network element to a second network element, the unidirectional failure affecting transmission of traffic from the first network element to the second network element, the method comprising:
a) at the second network element, detecting a first loss of signal indicative of the unidirectional failure and, in response to the first loss of signal, temporarily switching off a transmitter suitable for transmitting to the first network element through the bidirectional link; and
b) at the first network element, detecting a second loss of signal due to the temporarily switching off of the transmitter, thereby becoming aware that the bidirectional link is failed,
   wherein step a) comprises temporarily switching off the transmitter by:
   - starting a timer suitable for counting a time;
   - checking whether the timer is expired; and
   - in the affirmative, switching on the transmitter,
   wherein the method further comprises, after step a), a step of transmitting from the second network element to the first network element signaling packets with a link failure information indicative of the unidirectional failure.

Preferably, step a) further comprises a step of taking consequent actions allowing to reroute the traffic along a protection path bypassing the unidirectional failure. Preferably, if the bidirectional link is managed according to a link aggregation technique, the consequent actions comprise removing the bidirectional link from a link aggregation group.

Profitably, the unidirectional failure is removed, and the method further comprises a step of rerouting the traffic to the bidirectional link, both at the first network element and at the second network element.

Preferably, the method further comprises a step of configuring the timer so that the time is long enough to allow the first network element to detect the second loss of signal.

Preferably, after step b), the method further comprises:
c) at the first network element, in response to detection of the second loss of signal, temporarily switching off a transmitter suitable for transmitting the traffic to the second network element through the bidirectional link.

Preferably, after step c), the method further comprises a step of transmitting from the first network element to the second network element further signaling packets with a link failure information indicative of the second loss of signal.

According to a second aspect, the present invention provides a network element for a packet-switched communication network, the network element being connected through a bidirectional link with a further network element of the packet-switched communication network, the network element being configured to:
- detect a first loss of signal indicative of a unidirectional failure affecting transmission of traffic from the further network element to the network element along the bidirectional link; and
- in response to the first loss of signal, temporarily switch off a transmitter suitable for transmitting to the further network element through the bidirectional link by:
   - starting a timer suitable for counting a time;
   - checking whether the timer is expired; and
   - in the affirmative, switching on the transmitter, and transmitting to the further network element signaling packets with a link failure information indicative of the unidirectional failure.

Preferably, the network element is further configured to take consequent actions allowing to reroute the traffic along a protection path bypassing the unidirectional failure. If the bidirectional link is managed according to a link aggregation technique, the network element is preferably configured to take the consequent actions by removing the bidirectional link from a link aggregation group.

Preferably, the network element is further configured to reroute traffic to the bidirectional link, after the unidirectional failure has been removed.

According to a third aspect, the present invention provides a packet-switched communication network comprising a network element and a further network element connected to the network element by means of a link, the network element being as set forth above.

### Brief description of the drawings

The present invention will be better understood by reading the following detailed description, given by way of example and not of limitation, to be read by referring to the accompanying drawings, wherein:
- Figure 1 schematically shows a packet-switched communication network suitable for implementing the method according to an embodiment of the present invention; and
- Figure 2 is a flow chart showing the operation of the communication network of Figure 1 when a unidirectional failure occurs.

### Detailed description of preferred embodiments of the invention

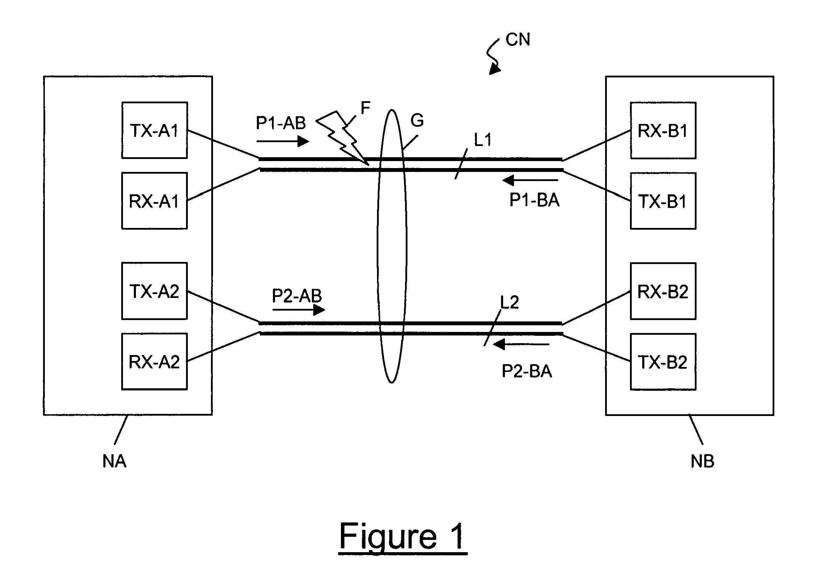

Figure 1 schematically shows a packet-switched communication network CN according to an embodiment of the present invention.

The communication network CN comprises a first network element NA, a second network element NB, a first link L1 and a second link L2.

Preferably, both the first link L1 and the second link L2 are bidirectional links. For instance, both the first link L1 and the second link L2 may be Ethernet links.

The first network element NA preferably comprises a first transmitter TX-A1 and a first receiver RX-A1 connected to the first link L1. Besides, preferably, the first network element NA comprises a second transmitter TX-A2 and a second receiver RX-A2 connected to the second link L2.

Besides, the second network element NB preferably comprises a first transmitter TX-B1 and a first receiver RX-B1 connected to the first link L1. Besides, preferably, the second network element NB comprises a second transmitter TX-B2 and a second receiver RX-B2 connected to the second link L2.

The first transmitter TX-A1 of the first network element NA is suitable for transmitting first packets P1-AB to the first receiver RX-B1 of the second network element NB by means of the first link L1. Similarly, the first transmitter TX-B1 of the second network element NB is suitable for transmitting second packets P1-BA to the first receiver RX-A1 of the first network element NA by means of the first link L1.

Besides, the second transmitter TX-A2 of the first network element NA is suitable for transmitting third packets P2-AB to the second receiver RX-B2 of the second network element NB by means of the second link L2. Similarly, the second transmitter TX-B2 of the second network element NB is suitable for transmitting fourth packets P2-BA to the second receiver RX-A2 of the first network element NA by means of the second link L2.

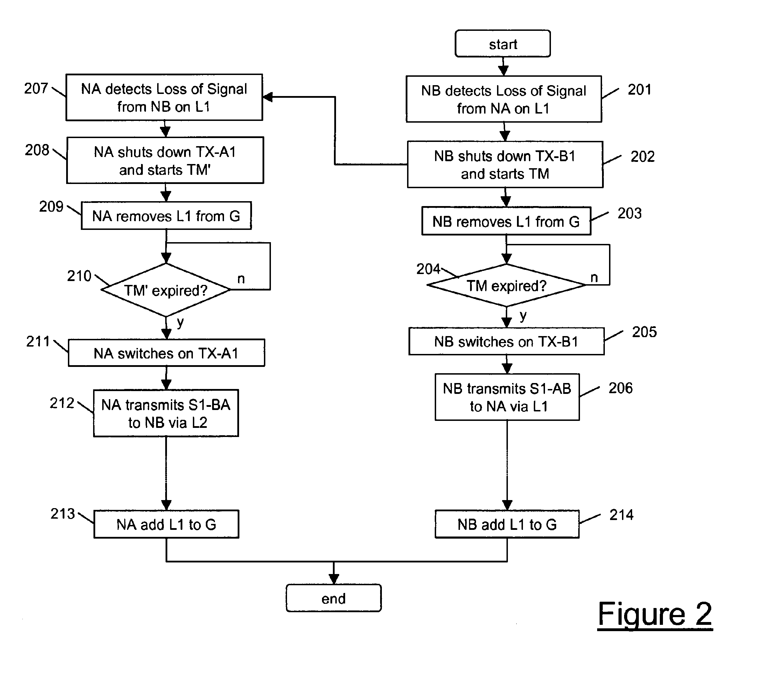

Preferably, the first network element NA and the second network element NB are both configured for managing the first link L1 and the second link L2 according to the above mentioned link aggregation technique, in such a way that the first link L1 and the second link L2 form a LAG (which is indicated as G in Figures 1 and 2). Preferably, if the first link L1 and the second link L2 are Ethernet links, the first network element NA and the second network element NB are configured for supporting the above mentioned LACP protocol for managing the link aggregation.

Therefore, the first packets P1-AB and the second packets P2-AB transmitted from the first network element NA to the second network element NB are part of a same logical channel, whose transmission is shared between the first link L1 and the second link L2. Similarly, the third packets P1-BA and the fourth packets P2-BA transmitted from the second network element NB to the first network element NA are part of a same logical channel, whose transmission is shared between the first link L1 and the second link L2.

The above communication system CN is merely exemplary. In particular, the first network element NA and the second network element NB may be connected by any number of links, said number being equal to or higher than 1. In case of multiple links, if the first network element NA and the second network element NB both support the above mentioned link aggregation technique, the LAG preferably comprises at least part of the multiple links.

It is now assumed that a unidirectional failure F (which is also shown in Figure 1) occurs on the first link L1, in the direction from the first network element NA to the second network element NB.

By referring to Figure 2, the operation of the communication network CN upon occurrence of the failure F will be described in detail.

When the unidirectional failure F occurs, the first receiver RX-B1 of the second network element NB detects a "Loss of Signal" on the first link L1 (step 201), thereby becoming aware substantially in real time of a failure F from NA to NB.

According to embodiments of the present invention, when the second network element NB becomes aware of the unidirectional failure F, it preferably switches off its first transmitter TX-B1, and starts a timer TM (step 202) suitable for counting a time DT. For instance, if the first link L1 is an optical link and the first transmitter TX-B1 of the second network element NB is a laser, step 202 comprises temporarily shutting down the laser. On the other hand, if the first link L1 is an electrical link and the first transmitter TX-B1 of the second network element NB is a PHY interface, the PHY is forced in hardware reset.

Then, preferably, the second network element NB removes the first link L1 from the LAG indicated as G in Figure 2 (step 203), thereby stopping transmitting the second packets P1-BA along the first link L1 (even though the first link L1 may still be used for transmitting signaling messages, as it will be described herein after). This is merely exemplary. Generally speaking, during step 203 the second network element NB takes any consequent action suitable for allowing rerouting of the first packets P1-AB along a protection path bypassing the failure F.

The second network element NB then checks whether the timer TM is expired (step 204). In the negative, the second network element NB preferably does not perform any other action, except repeating step 204 in a substantially continuous way or in a periodical way.

When, while executing step 204, the second network element NB determines that the timer TM is expired, it preferably switches on again its first transmitter TX-B1 (step 205).

Therefore, the steps 202, 204 and 205 allow the second network element NB to temporarily switch off its first transmitter TX-B1 for a time DT, whose duration is controlled by the timer TM. Preferably, the timer TM is configured so that the time DT (during which the first transmitter TX-B1 of the second network element NB is switched off) is long enough for allowing the first network element NA to detect a "Loss of Signal" from the second network element NB on the first link L1. This advantageously allows signaling the unidirectional failure F to the first network element NA, as it will be discussed in further detail herein after.

Then, preferably, the second network element NB preferably starts transmitting to the first network element NA along the first link L1 signaling packets S1-AB with a "link failure" information indicative of the unidirectional failure F (step 206). Preferably, if the first link L1 and the second link L2 are Ethernet links managed according to the above mentioned link aggregation technique, the signaling packets S1-AB are LACP packets.

By referring back to step 202, when the second network element NB switches off its first transmitter TX-B1, the first receiver RX-A1 of the first network element NA then detects a "Loss of Signal" on the first link L1 from the second node NB (step 207).

According to embodiments of the present invention, when the first network element NA detects the "Loss of Signal" on the first link L1 from the second network element NB, it preferably switches off its first transmitter TX-A1, and starts a timer TM' (step 208) suitable for counting a time DT'. For instance, if the first link L1 is an optical link and the first transmitter TX-A1 of the first network element NA is a laser, step 208 comprises temporarily shutting down the laser. On the other hand, if the first link L1 is an electrical link and the first transmitter TX-A1 of the first network element NA is a PHY interface, the PHY is forced in hardware reset.

Then, preferably, the first network element NA removes the first link L1 from the LAG indicated as G in Figure 2 (step 209). Again, this is merely exemplary. Generally speaking, during step 209 the second network element NB takes any consequent action suitable for allowing rerouting of the first packets P1-AB along a protection path bypassing the failure F.

The first network element NA then checks whether the timer TM' is expired (step 210). In the negative, the first network element NA preferably does not perform any other action, except repeating step 210 in a substantially continuous way or in a periodical way.

When, while executing step 210, the first element NA determines that the timer TM' is expired, it preferably switches on again its first transmitter TX-A1 (step 211).

Therefore, the steps 208, 210 and 211 allow also the first network element NA to temporarily switch off its first transmitter TX-A1 for a time DT', whose expiration is controlled by the timer TM'. Preferably, also the timer TM' is configured so that the time DT' during which the first transmitter TX-A1 of the first network element NB is long enough for allowing the second network element NB to detect a "Loss of Signal" from the first network element NA on the first link L1 (even though the second network element NB has already detected a "Loss of Signal" due to the failure F). In other words, upon detection of the "Loss of Signal", the first network element NA behaves substantially in the same way as the second network element NB upon detection of the "Loss of Signal" due to the failure F. This advantageously allows the method to operate in case of unidirectional failure affecting any of the two possible directions of the first link L1.

Preferably, the time DT' counter by the timer TM' is substantially equal to the time DT counted by the timer TM.

Then, preferably, the first network element NA starts transmitting to the second network element NB along the second link L2 signaling packets S1-BA with a "link failure" information indicative of the unidirectional failure F. Preferably, if the first link L1 and the second link L2 are Ethernet links managed according to the above mentioned link aggregation technique, the signaling packets S1-BA are LACP packets.

After steps 206 and 212 are completed, the first network element NA and the second network element NB are then exchanging the signaling packets S1-AB and S1-BA, indicating each other that the first link L1 is failed. Preferably, possible subsequent steps are therefore managed by exchanging such signaling packets.

Preferably, such subsequent steps may comprise actions for reverting transmission of the first packets P1-AB and the second packets P2-BA to the first link L1, when the unidirectional failure F is removed. Such subsequent steps may comprise for instance inserting again the first link L1 in the LAG (steps 213 and 214 of Figure 2).

Therefore, advantageously, the above disclosed method for signaling the unidirectional failure F from the second network element NB to the first network element NA is much faster than the above known methods. Indeed, signaling of the unidirectional failure does not include any software-based operation (such as generation of a signaling message and/or processing of a received signaling message), which may be very long. On the contrary, the above disclosed method comprises only hardware-based operations such as switching off a transmitter and detecting a loss of packets at a receiver.

Such operations are very simple and fast. Indeed, when the unidirectional failure F is detected at the second network element NB which switches off its transmitter, the first network element NA becomes aware of this switching off operation substantially in real time. Indeed, typically, the delay between switching off a transmitter and detecting the switching off at a receiver is of some hundreds of microseconds. This delay is much lower that the maximum delay which is typically requested for performing actions to be taken in response to the failure (e.g. 50 msec).

Therefore, advantageously, the above method allows also the first network element NA to promptly react to the unidirectional failure F, thereby performing the requested actions (such as, in the above example, step 209 of removing the first link L1 from the LAG) in a very short time.

After the requested actions have been performed both at the second network element NB (see step 203) and at the first network element NA (see step 209), transmitters at both sides are switched on and the two network elements starts exchanging signaling messages for managing the subsequent steps. Therefore, advantageously, the above method is compliant to standards defining the known traffic protection mechanisms, since it can be implemented before starting exchange of signaling messages only for signaling the unidirectional failure F to the first network element NA. Subsequent steps (e.g. reverting to the failed link after failure has been removed) will be performed by exchanging signaling messages.

## Claims

1. A method for signaling a unidirectional failure (F) on a bidirectional link (L1) of a packet-switched communication network (CN), said bidirectional link (L1) connecting a first network element (NA) to a second network element (NB), said unidirectional failure (F) affecting transmission of traffic from said first network element (NA) to said second network element (NB), said method comprising:
a) at said second network element (NB), detecting a first loss of signal indicative of said unidirectional failure (F) and, in response to said first loss of signal, temporarily switching off a transmitter (TX-B1) suitable for transmitting to said first network element (NA) through said bidirectional link (L1); and
b) at said first network element (NA), detecting a second loss of signal due to said temporarily switching off of said transmitter (TX-B1), thereby becoming aware that said bidirectional link (L1) is failed,
wherein said step a) comprises temporarily switching off said transmitter (TX-B1) by:
- starting a timer (TM) suitable for counting a time (DT);
- checking whether said timer (TM) is expired; and
- in the affirmative, switching on said transmitter (TX-B1),
wherein the method further comprises, after said step a), a step of transmitting from said second network element (NB) to said first network element (NA) signaling packets (S1-AB) with a link failure information indicative of said unidirectional failure (F).

2. The method according to claim 1, wherein said step a) further comprises a step of taking consequent actions allowing to reroute said traffic along a protection path bypassing said unidirectional failure (F).

3. The method according to claim 2 wherein, if said bidirectional link (L1) is managed according to a link aggregation technique, said consequent actions comprise removing said bidirectional link (L1) from a link aggregation group.

4. The method according to any of the preceding claims, wherein said unidirectional failure (F) is removed and wherein the method further comprises a step of rerouting said traffic to said bidirectional link (L1), both at said first network element (NA) and at said second network element (NB).

5. The method according to any of the preceding claims, wherein it further comprises a step of configuring said timer (TM) so that said time (DT) is long enough to allow said first network element (NA) to detect said second loss of signal.

6. The method according to any of the preceding claims, wherein it further comprises, after said step b):
c) at said first network element (NA), in response to detection of said second loss of signal, temporarily switching off a transmitter (TX-A1) suitable for transmitting said traffic to said second network element (NB) through said bidirectional link (L1).

7. The method according to claims 6, wherein it further comprises, after said step c), a step of transmitting from said first network element (NA) to said second network element (NB) further signaling packets (S1-BA) with a link failure information indicative of said second loss of signal.

8. A network element (NB) for a packet-switched communication network (CN), said network element (NB) being connected through a bidirectional link (L1) with a further network element (NA) of said packet-switched communication network, said network element (NB) being configured to:
- detect a first loss of signal indicative of a unidirectional failure (F) affecting transmission of traffic from said further network element (NA) to said network element (NB) along said bidirectional link (L1); and
- in response to said first loss of signal, temporarily switch off a transmitter (TX-B1) suitable for transmitting to said further network element (NA) through said bidirectional link (L1) by:
- starting a timer (TM) suitable for counting a time (DT);
- checking whether said timer (TM) is expired; and
- in the affirmative, switching on said transmitter (TX-B1), and transmitting to said further network element (NA) signaling packets (S1-AB) with a link failure information indicative of said unidirectional failure (F).

9. The network element (NB) according to claim 8, wherein it is further configured to take consequent actions allowing to reroute said traffic along a protection path bypassing said unidirectional failure (F).

10. The network element (NB) according to claim 9, wherein, if said bidirectional link (L1) is managed according to a link aggregation technique, said network element (NB) is configured to take said consequent actions by removing said bidirectional link (L1) from a link aggregation group.

11. The network element (NB) according to any of claims 8 to 10, wherein it is further configured to rerouting said traffic to said bidirectional link (L1), after said unidirectional failure (F) has been removed.

12. A packet-switched communication network comprising a network element (NB) and a further network element (NA) connected to said network element (NB) by means of a bidirectional link (L1), said network element (NB) being according to any of claims 8 to 11.

## Patentansprüche

1. Verfahren zur Signalisierung eines unidirektionalen Fehlers (F) auf einer bidirektionalen Verknüpfung (L1) eines paketgeschalteten Kommunikationsnetzwerks (CN), wobei die besagte bidirektionale Verknüpfung (L1) ein erstes Netzwerkelement (NA) mit einem zweiten Netzwerkelement (NB) verbindet, wobei der besagte unidirektionale Fehler (F) die Übertragung von Verkehr von dem besagten ersten Netzwerkelement (NA) an das besagte zweite Netzwerkelement (NB) beeinträchtigt, wobei das besagte Verfahren umfasst:
a) An dem besagten zweiten Netzwerkelement (NB), Detektieren eines ersten Signalverlustes, welcher den besagten unidirektionalen Fehler (F) anzeigt, und in Reaktion auf den besagten ersten Signalverlust, vorübergehendes Abschalten eines Senders (TX-B1), welcher für Übertragungen an das besagte erste Netzwerkelement (NA) über die besagte bidirektionale Verknüpfung (L1) geeignet ist; und
b) an dem besagten ersten Netzwerkelement (NA), Detektieren eines zweiten Signalverlustes, welcher von dem besagten vorübergehenden Abschalten des besagten Senders (TX-B1) verursacht wird, wodurch erkannt wird, dass die besagte bidirektionale Verknüpfung (L1) einen Fehler aufweist,
wobei der besagte Schritt a) das vorübergehende Abschalten des besagten Senders (TX-B1) durch:
- Starten eines Timers (TM), welcher dazu ausgelegt ist, eine Zeitspanne zu zählen (DT);
- Prüfen, ob der besagte Timer (TM) abgelaufen ist; und
- wenn dies der Fall ist, Einschalten des besagten Senders (TX-B1),
umfasst,
wobei das Verfahren nach dem besagten Schritt a) weiterhin einen Schritt des Übertragens, von dem besagten zweiten Netzwerkelement (NB) an das besagte erste Netzwerkelement (NA), von Signalisierungspaketen (S1-AB) mit einer Verknüpfungsfehlerinformation, welche den besagten unidirektionalen Fehler (F) anzeigt, umfasst.

2. Verfahren nach Anspruch 1, wobei der besagte Schritt a) weiterhin einen Schritt des Treffens von Folgemaßnahmen umfasst, um den besagten Verkehr über einen Schutzpfad, welcher den besagten unidirektionalen Fehler (F) umgeht, umzuleiten.

3. Verfahren nach Anspruch 2, wobei, wenn die besagte bidirektionale Verknüpfung (L1) gemäß einer Verknüpfungsaggregationstechnik verwaltet wird, die besagten Folgemaßnahmen das Entfernen der besagten bidirektionalen Verknüpfung (L1) aus einer Verknüpfungsaggregationsgruppe umfasst.

4. Verfahren nach einem beliebigen der vorstehenden Ansprüche, wobei der besagte unidirektionale Fehler (F) behoben wird, und wobei das Verfahren weiterhin einen Schritt des Umleitens des besagten Verkehrs an die besagte bidirektionale Verknüpfung (L1), sowohl an dem besagten ersten Netzwerkelement (NA) als auch an dem besagten zweiten Netzwerkelement (NB), umfasst.

5. Verfahren nach einem beliebigen der vorstehenden Ansprüche, weiterhin umfassend einen Schritt des Konfigurierens des besagten Timers (TM), so dass die besagte Zeitspanne (DT) lang genug ist, um es dem besagten ersten Netzwerkelement (NA) zu ermöglichen, den besagten zweiten Signalverlust zu detektieren.

6. Verfahren nach einem beliebigen der vorstehenden Ansprüche, weiterhin umfassend, im Anschluss an den besagten Schritt b):
c) An dem besagten ersten Netzwerkelement (NA), in Reaktion auf das Detektieren des besagten zweiten Signalverlustes, vorübergehendes Abschalten eines Senders (TX-A1), welcher für die Übertragung des besagten Verkehrs über die besagte bidirektionale Verknüpfung (L1) an das besagte zweite Netzwerkelement (NB) geeignet ist.

7. Verfahren nach Anspruch 6, weiterhin umfassend, im Anschluss an den besagten Schritt c), einen Schritt des Übertragens weiterer Signalisierungspakete (S1-BA) mit einer Verknüpfungsfehlerinformation, welche den besagten zweiten Signalverlust anzeigt, von dem besagten ersten Netzwerkelement (NA) an das besagte zweite Netzwerkelement (NB).

8. Netzwerkelement (NB) für ein paketgeschaltetes Kommunikationsnetzwerk (CN), wobei das besagte Netzwerkelement (NB) über eine bidirektionale Verknüpfung (L1) mit einem weiteren Netzwerkelement (NA) des besagten paketgeschalteten Kommunikationsnetzwerks verbunden ist, wobei das besagte Netzwerkelement (NB) konfiguriert ist für:
- Das Detektieren eines ersten Signalverlustes, welcher einen die Übertragung von Verkehr von dem besagten weiteren Netzwerkelement (NA) an das besagte Netzwerkelement (NB) über die besagte bidirektionale Verknüpfung (L1) beeinträchtigenden unidirektionalen Fehler (F) anzeigt; und
- in Reaktion auf den besagten ersten Signalverlust, das vorübergehende Abschalten eines Senders (TX-B1), welcher für die Übertragung über die besagte bidirektionale Verknüpfung (L1) an das besagte weitere Netzwerkelement (NA) geeignet ist, durch:
- Starten eines Timers (TM), welcher dazu ausgelegt ist, eine Zeitspanne zu zählen (DT);
- Prüfen, ob der besagte Timer (TM) abgelaufen ist; und
- wenn dies der Fall ist, Einschalten des besagten Senders (TX-B1), und Übertragen von Signalisierungspaketen (S1-AB) mit einer Verknüpfungsfehlerinformation, welche den besagten unidirektionalen Fehler (F) anzeigt, an das besagte weitere Netzwerkelement (NA).

9. Netzwerkelement (NB) nach Anspruch 8, weiterhin dafür konfiguriert, Folgemaßnahmen zu treffen, um den besagten Verkehr über einen Schutzpfad, welcher den besagten unidirektionalen Fehler (F) umgeht, umzuleiten.

10. Netzwerkelement (NB) nach Anspruch 9, wobei, wenn die besagte bidirektionale Verknüpfung (L1) gemäß einer Verknüpfungsaggregationstechnik verwaltet wird, das besagte Netzwerkelement (NB) dafür konfiguriert ist, die besagten Folgemaßnahmen zu treffen, indem es die besagte bidirektionale Verknüpfung (L1) aus einer Verknüpfungsaggregationsgruppe entfernt.

11. Netzwerkelement (NB) nach einem beliebigen der Ansprüche 8 bis 10, weiterhin dafür konfiguriert, den besagten Verkehr an die besagte bidirektionale Verknüpfung (L1) umzuleiten, nachdem der besagte unidirektionale Fehler (F) behoben wurde.

12. Paketgeschaltetes Kommunikationsnetzwerk mit einem Netzwerkelement (NB) und einem weiteren Netzwerkelement (NA), welches über eine bidirektionale Verknüpfung (L1) mit dem besagten Netzwerkelement (NB) verbunden ist, wobei das besagte Netzwerkelement (NB) einem beliebigen der Ansprüche 8 bis 11 entspricht.

## Revendications

1. Procédé pour signaler un échec unidirectionnel (F) sur une liaison bidirectionnelle (L1) d'un réseau de communication à commutation par paquets (CN), ladite liaison bidirectionnelle (L1) reliant un premier élément de réseau (NA) à un deuxième élément de réseau (NB), ledit échec unidirectionnel (F) affectant la transmission du trafic entre ledit premier élément de réseau (NA) et ledit deuxième élément de réseau (NB), ledit procédé comprenant les étapes suivantes :
a) au niveau dudit deuxième élément de réseau (NB), détecter une première perte de signal indiquant ledit échec unidirectionnel (F) et, en réponse à ladite première perte de signal, désactiver temporairement un émetteur (TX-B1) permettant la transmission audit premier élément de réseau (NA) par l'intermédiaire de ladite liaison bidirectionnelle (L1) ; et
b) au niveau dudit premier élément de réseau (NA), détecter une deuxième perte de signal due à ladite désactivation temporaire dudit émetteur (TX-B1), devenant ainsi conscient que ladite liaison bidirectionnelle (L1) a échoué,
dans lequel ladite étape a) comprend la désactivation temporaire dudit émetteur (TX-B1) :
- en démarrant un temporisateur (TM) permettant de mesurer le temps écoulé (DT) ;
- en vérifiant que le temps dudit temporisateur (TM) est expiré ; et
- si tel est le cas, en activant ledit émetteur (TX-B1),
dans lequel le procédé comprend en outre, après ladite étape a), une étape de transmission entre ledit deuxième élément de réseau (NB) et ledit premier élément de réseau (NA) de paquets de signalisation (S1-AB) avec une information d'échec de liaison indiquant ledit échec unidirectionnel (F).

2. Procédé selon la revendication 1, dans lequel ladite étape a) comprend en outre une étape consistant à effectuer des actions conséquentes permettant de réacheminer ledit trafic le long d'un chemin de protection évitant ledit échec unidirectionnel (F).

3. Procédé selon la revendication 2 dans lequel, si ladite liaison bidirectionnelle (L1) est gérée conformément à une technique d'agrégation de liaisons, lesdites actions conséquentes comprennent le retrait de ladite liaison bidirectionnelle (L1) d'un groupe d'agrégation de liaisons.

4. Procédé selon l'une quelconque des revendications précédentes, dans lequel ledit échec unidirectionnel (F) est supprimé et dans lequel le procédé comprend en outre une étape de réacheminement dudit trafic vers ladite liaison bidirectionnelle (L1), à la fois au niveau dudit premier élément de réseau (NA) et au niveau dudit deuxième élément de réseau (NB).

5. Procédé selon l'une quelconque des revendications précédentes, dans lequel le procédé comprend en outre une étape de configuration dudit temporisateur (TM) de sorte que ledit temps (DT) soit assez long pour permettre audit premier élément de réseau (NA) de détecter ladite deuxième perte de signal.

6. Procédé selon l'une quelconque des revendications précédentes, dans lequel le procédé comprend en outre, après ladite étape b) :
c) au niveau dudit premier élément de réseau (NA), en réponse à une détection de ladite deuxième perte de signal, la désactivation temporaire d'un émetteur (TX-A1) permettant de transmettre ledit trafic audit deuxième élément de réseau (NB) par l'intermédiaire de ladite liaison bidirectionnelle (L1).

7. Procédé selon la revendication 6, dans lequel le procédé comprend en outre, après ladite étape c), une étape de transmission entre ledit premier élément de réseau (NA) et ledit deuxième élément de réseau (NB) d'autres paquets de signalisation (S1-BA) avec une information d'échec de liaison indiquant ladite deuxième perte de signal.

8. Élément de réseau (NB) pour un réseau de communication à commutation par paquets (CN), ledit élément de réseau (NB) étant connecté par l'intermédiaire d'une liaison bidirectionnelle (L1) à un autre élément de réseau (NA) dudit réseau de communication à commutation par paquets, ledit élément de réseau (NB) étant configuré pour :
- détecter une première perte de signal indiquant un échec unidirectionnel (F) affectant la transmission de trafic entre ledit autre élément de réseau (NA) et ledit élément de réseau (NB) le long de ladite liaison bidirectionnelle (L1) ; et
- en réponse à ladite première perte de signal, désactiver temporairement un émetteur (TX-B1) permettant la transmission audit autre élément de réseau (NA) par l'intermédiaire de ladite liaison bidirectionnelle (L1) :
- en démarrant un temporisateur (TM) permettant de mesurer le temps écoulé (DT) ;
- en vérifiant que le temps dudit temporisateur (TM) est expiré ; et
- si tel est le cas, en activant ledit émetteur (TX-B1), et en transmettant audit autre élément de réseau (NA) des paquets de signalisation (S1-AB) avec une information d'échec de liaison indiquant ledit échec unidirectionnel (F).

9. Élément de réseau (NB) selon la revendication 8, dans lequel l'élément de réseau est en outre configuré pour effectuer des actions conséquentes permettant de réacheminer ledit trafic le long d'un chemin de protection évitant ledit échec unidirectionnel (F).

10. Élément de réseau (NB) selon la revendication 9, dans lequel, si ladite liaison bidirectionnelle (L1) est gérée conformément à une technique d'agrégation de liaisons, ledit élément de réseau (NB) est configuré pour effectuer lesdites actions conséquentes en retirant ladite liaison bidirectionnelle (L1) d'un groupe d'agrégation de liaisons.

11. Élément de réseau (NB) selon l'une quelconque des revendications 8 à 10, dans lequel l'élément de réseau est en outre configuré pour réacheminer ledit trafic vers ladite liaison bidirectionnelle (L1), après que ledit échec unidirectionnel (F) a été supprimé.

12. Réseau de communication à commutation par paquets comprenant un élément de réseau (NB) et un autre élément de réseau (NA) connecté audit élément de réseau (NB) au moyen d'une liaison bidirectionnelle (L1), ledit élément de réseau (NB) étant conforme à l'une quelconque des revendications 8 à 11.
